# EUROPÄISCHE PATENTSCHRIFT

(11) **EP 2 997 279 B1**
(45) Veröffentlichungstag und Bekanntmachung des Hinweises auf die Patenterteilung: **01.08.2018**
(21) Anmeldenummer: 14723328.2
(22) Anmeldetag: 02.05.2014
(51) Int. Cl.: F16D 55/22, F16D 65/097

(54) **SATTELSCHEIBENBREMSE EINES FAHRZEUGS, INSBESONDERE EINES NUTZFAHRZEUGS, UND BREMSSATTEL EINER SOLCHEN BREMSE**
CALIPER DISC BRAKE OF A VEHICLE, IN PARTICULAR OF A COMMERCIAL VEHICLE, AND BRAKE CALIPER OF SUCH A BRAKE
FREIN À DISQUE À ÉTRIER D'UN VÉHICULE, EN PARTICULIER D'UN VÉHICULE UTILITAIRE, ET RESSORT DE RETENUE D'UN TEL FREIN

(30) Priorität: 13.05.2013 DE 102013008161
(43) Veröffentlichungstag der Anmeldung: 23.03.2016
(73) Patentinhaber: WABCO Europe BVBA, 1170 Brussels (BE)
(72) Erfinder: FALTER, Wolfgang, 69118 Heidelberg (DE); FRIEBUS, Oliver, 69123 Heidelberg (DE); JÄGER, Hellmut, 67067 Ludwigshafen (DE); JUNGMANN, Hans-Christian, 69517 Gorxheimertal (DE)
(74) Vertreter: Lauerwald, Jörg
(86) Internationale Anmeldenummer: PCT/EP2014/001175
(87) Internationale Veröffentlichungsnummer: WO 2014/183839

(56) Entgegenhaltungen:
- EP-A2- 0 694 707
- DE-A1-102007 046 945
- DE-A1-102007 049 979
- DE-B3-102011 115 304

## Beschreibung

Die Erfindung betrifft eine Sattelscheibenbremse eines Fahrzeugs, insbesondere eines Nutzfahrzeugs, mit einer eine Drehachse aufweisenden Bremsscheibe, einem Bremssattel, einem Bremsenträger, einem Kraftübertragungselement, wie etwa einem Belagträger und/oder einer Druckplatte, das in einem Schacht des Bremssattels oder des Bremsenträgers geführt und abgestützt ist, einer Niederhaltefeder zum Niederhalten des Kraftübertragungselements und einer von einer Halteeinrichtung an dem Sattel gehaltenen und abgestützten Niederhalteeinrichtung, die die Niederhaltefeder radial gegen die Kraftübertragungseinrichtung vorspannt und die Niederhaltefeder tangential in Drehrichtung bei Vorwärtsfahrt gegen die Kraftübertragungseinrichtung vorspannt, wobei die Halteeinrichtung eine parallel zur Drehachse liegende Mittellinie aufweist.

Bremsen der eingangs genannten Art sind bekannt, beispielsweise aus der EP 694 707 B3. Charakteristisch für die Bremsen nach dem Stand der Technik ist der Achsversatz des Niederhaltebügels über eine außermittige formschlüssige Lagerung im Bremssattel, um über den formschlüssigen Eingriff in die dafür speziell ausgeformten Niederhaltefedern neben der radialen auch eine tangentiale Vorspannung auf die Bremsbeläge auszuüben.

Bremssättel sind zum Beispiel aus der DE 10 2011 115 304 B3, DE 10 2007 06 945 A1 oder DE 10 2007 049 979 A1 bekannt.

Das Grundprinzip einer radialen und tangentialen Vorspannung hat sich bewährt und soll beibehalten werden. Jedoch werden erfindungsgemäß konstruktive und funktionelle Änderungen am Bremssattel sowie an den einschlägigen Teilen des Niederhaltesystems vorgenommen, um größere Wirtschaftlichkeit und größere Vielseitigkeit zu erreichen.

Die Figuren 1 und 2 zeigen die Bremse nach der EP 694 707 B3. Dabei zeigt Figur 1 einen in einer Schachtführung des Bremssattels oder Bremsenträgers radial einwärts und beidseitig in Umfangsrichtung geführten und abgestützten Bremsbelag 11, auf dessen radialer Außenkante eine gegenüber ihrer Mittenachse zu beiden Seiten hin symmetrisch ausgeformte Niederhaltefeder gelagert ist. Die Niederhaltefeder weist mittig einen radial tiefer liegenden Mittenbereich 3 auf, von dem sich die höher liegenden Federschenkel 6, 7 beidseitig entlang der Außenkante des Belags nach auswärts hin erstrecken, um dann endseitig federnd auf den Bremsbelag einzuwirken, wenn in den hier radial einwärts ausgeformten Mittenbereich unter Formschluß ein ebenfalls symmetrisch ausgeformter Niederhaltebügel 1 eingreift.

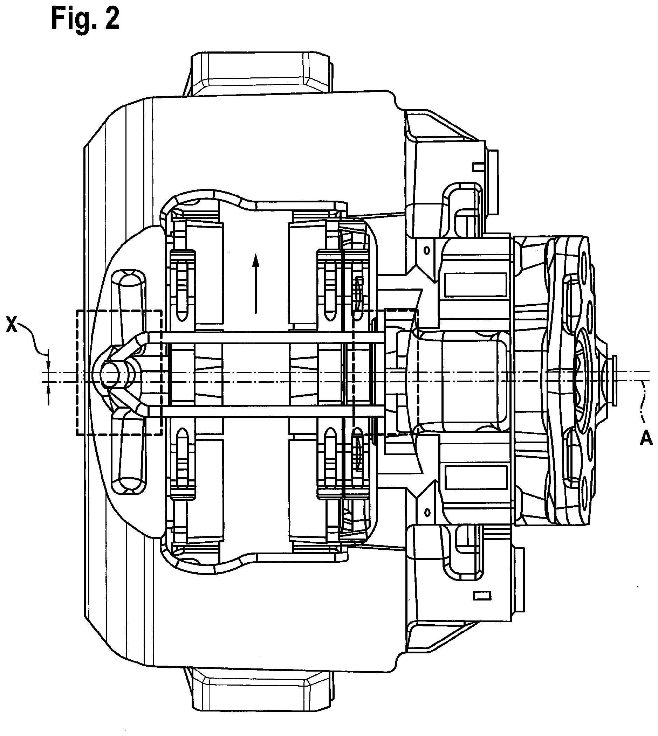

Der Niederhaltebügel 1 ist aus einem Rundmaterial ausgeformt. Die Federvorspannung tritt dann ein, wenn der Niederhaltebügel 1 wie nach Figur 2 auf der Zuspannseite in Formschlußöffnungen des Bremssattels verankert wird und dann andererseits fest, aber lösbar auf der Felgenseite auf einem Lagerblock des Bremssattels mittels Verschraubung befestigt wird. Der Niederhaltebügel erstreckt sich über eine dem Ein-/Ausbau der beidseitig der Bremsscheibe gelagerten Bremsbeläge dienenden Sattelöffnung und in einer Richtung zur Bremsen- bzw. Mittenachse A.

In Axialrichtung der Bremsbeläge sind die Niederhaltefedern mit dem Bremsbelag gekoppelt, weil radiale Ansätze 12, 14 von der Außenkante des Bremsbelages längliche Öffnungen 8, 9, 10 in der Feder durchdringen. Endseitig liegen die Federschenkel gegen weitere radiale Ansätze 13, 13 der Außenkante des Bremsbelages an. Die Niederhaltefedern sind als Blattfedern ausgebildet.

Die mittels der Niederhaltefeder auf den Bremsbelag einwirkende radiale und tangentiale Vorspannung wird nach dem Stand der Technik dadurch erzeugt, daß der Niederhaltebügel 1 in den radial ausgeformten Mittenbereich 3 der Niederhaltefeder formschlüssig eingreift und seinerseits unter Formschlüssigkeit in zuspann- und felgenseitigen Verankerungen des Bremssattels immer in Drehrichtung der Bremsscheibe bei Vorwärtsfahrt in Richtung Bremsscheibenauslaufseite um einen Achsversatz x gegenüber der Mitten- bzw. Bremsenachse A versetzt gelagert ist. Dadurch wird der entsprechende Federschenkel auch in Tangentialrichtung gedrängt. Für die außermittige formschlüssige Lagerung des Niederhaltebügels 1 müssen im Gußteil des Bremssattels die dafür erforderlichen gießtechnischen Ausformungen in entsprechender Positionierung vorhanden sein, die dann anschließend noch mechanischen Bearbeitungen zu unterziehen sind. Die Lagerstellen für den Niederhaltebügel 1 sind somit unsymmetrisch am/im Bremssattel ausgeformt.

Die einschlägigen Bremsen werden beidseitig der Achse verbaut, so daß sie auch spiegelbildlich ausgeführt sein müssen. Dies bedeutet, daß für Bremssättel nach dem Stand der Technik für eine linke und eine rechte Bremse unterschiedliche Gußmodellausführungen zur Herstellung der unsymmetrischen Lager- und Haltebereiche erforderlich sind. Demzufolge sind auch die Positionen der nachfolgenden mechanischen Bearbeitung für die Lager- und Haltebereiche bei einer linken Bremse anders als bei einer rechten Bremse.

Wegen der oben genannten Unsymmetrie steht dieses Prinzip mit unterschiedlichen Sattelausführungen einer wirtschaftlichen und kostenoptimierten Herstellung von den in Großserien gießtechnisch hergestellter und mechanisch bearbeiteter Bremssättel entgegen.

Der Erfindung liegt daher die Aufgabe zugrunde, die Bremse nach der EP 694 707 B3 derart weiterzubilden, daß die genannten Nachteile beseitigt sind. Insbesondere liegt der Erfindung die Aufgabe zugrunde, die Sattelscheibenbremse der eingangs genannten Art wirtschaftlicher und vielseitiger auszuführen.

Erfindungsgemäß wird die gestellte Aufgabe bei einer Sattelscheibenbremse der eingangs genannten Art dadurch gelöst, daß die tangentiale Vorspannung zumindest teilweise darauf zurückgeht, daß die Abmessungen der Niederhalteeinrichtung, gemessen in Tangentialrichtung von der Mittellinie auf der Scheibenauslaufseite zumindest abschnittweise größer sind als auf der Scheibeneinlaufseite.

Dabei liegt der Erfindung die Erkenntnis zugrunde, daß die Halteeinrichtung für die Niederhalteeinrichtung oder anders ausgedrückt die Lagerbereiche für einen Niederhaltebügel am Sattel dann symmetrisch ausgeführt werden können, wenn die tangentiale Vorspannung der Niederhaltefeder nicht auf eine Unsymmetrie des Sattels, sondern vielmehr auf eine Unsymmetrie der Niederhalteeinrichtung zurückgeht.

Die Vorteile liegen damit auf der Hand. Denn die in den Halte- und Lagerbereichen für die Niederhalteeinrichtung pro Achse spiegelsymmetrisch ausgeführten Bremssättel erfordern zur gießtechnischen Ausformung keine insofern unterschiedlichen Gießformen mehr. Darüber hinaus kann die anschließende mechanische Bearbeitung vereinheitlicht werden. In einer bevorzugten Ausführungsform weist die Bremse ein gießtechnisch hergestellte Bremssattel auf, dessen Halteeinrichtung zum Halten und Abstützen der Niederhalteeinrichtung bezüglich einer die Mittellinie enthaltenden Radialebene symmetrisch ist, soweit ihre Kontur gießtechnisch vorgegeben ist. Mit gießtechnisch vorgegebener Symmetrie ist dabei erfindungsgemäß gemeint, daß zur globalen Herstellung der Kontur der Haiteeinrichtung eine Gießform entsprechend symmetrischer Kontur verwendet wird, wohingegen Unsymmetrien, die auf nach dem Gießen erfolgende Bearbeitungen zurückgehen, im Rahmen der Erfindung liegen, wie etwa das unsymmetrische Einbringen einer oder mehrerer Bohrungen und/oder unsymmetrische mechanische Bearbeitungen zur Behandlung der Oberfläche.

In weiterer Ausgestaltung kann vorgesehen sein, daß die Halteeinrichtung einen sich in Richtung der Drehachse erstreckenden Vorsprung aufweist, dessen Seitenflanken zum Aufnehmen von Tangentialkräften dienen und dessen radial innen liegende Flanke zum Aufnehmen von Radialkräften dient. Der Vorsprung ist weiter bevorzugt dachkantenartig ausgestaltet.

Mit anderen Worten liegt nach dieser Ausgestaltung ein formschlüssiger Haltebereich für die Niederhalteeinrichtung vor. Er ist als Formschlußblock im Gußteil ausgeformt und weist zur Seite der Bremsscheibe bzw. der Niederhalteeinrichtung hin einen dachkantenähnlichen Vorsprung auf, gegen den sich das korrespondierende Ende des Niederhaltebügels radial abstützt, wenn die beidseitigen Zapfenansätze ebenso korrespondierend die Außenflächen des Formschlußblockes umgreifen. Damit ist in der Einbaulage die Formschlüssigkeit symmetrisch hergestellt.

Erfindungsgemäß weiter bevorzugt liegt der Vorsprung der Halteeinrichtung auf der Zuspannseite.

Nach einer weiter bevorzugten Ausführungsform der Erfindung kann die Halteeinrichtung eine Kodiereinrichtung aufweisen. Dadurch kann gewährleistet werden, daß nur eine zu dem Bremssattel passende Niederhalteeinrichtung an dem Sattel montiert wird.

Die Kodiereinrichtung kann einen Ansatz aufweisen. Ein solcher Ansatz kann in einfacher Weise bei der mechanischen Bearbeitung der Fläche als Überstand ausgelassen werden. Der Ansatz kann prinzipiell beliebig ausgeformt und positioniert sein. Zur Kodierung ist in einem solchen Falle an der zugehörigen Niederhalteeinrichtung in entsprechender Position eine korrespondierende Ausnehmung ausgebildet, so daß nur diese Niederhalteeinrichtung auf die Bremse bzw. zu dem Sattel paßt. Damit kann eine Kodierung geschaffen werden, die die richtige Niederhalteeinrichtung der linken bzw. rechten Bremse zuordnet und/oder die richtige Niederhalteeinrichtung angesichts der Größe der zu bestückenden Bremse sicherstellt.

Zusätzlich oder alternativ kann vorgesehen sein, zwischen der Lagerblockkontur umfänglich und am Niederhaltebügel ausgeformte Umgreifungshaken auszubilden. Wenn diese Teile bzw. Anschlußbereiche deckend korrespondieren, kann dadurch ebenfalls die richtige Zuordnung sichergestellt werden.

Die Halteeinrichtung kann erfindungsgemäß bevorzugt eine Verschraubungseinrichtung aufweisen. Dadurch ist eine besonders einfache Art der Ausgestaltung geschaffen.

Die Kodiereinrichtung und/oder die Verschraubungseinrichtung kann/können erfindungsgemäß auf der Felgenseite liegen. Sofern nicht gießtechnisch ausgebildet, muß weder die Kodiereinrichtung noch die Verschraubungseinrichtung symmetrisch zu der die Mittellinie enthaltenden Radialebene ausgestaltet sein.

Die Erfindung ist sowohl auf einen Festsattel als auch auf einen Gleitsattel anwendbar.

Im folgenden ist die Erfindung anhand bevorzugter Ausführungsbeispiele unter Bezugnahme auf die beiliegende Zeichnung mit weiteren Einzelheiten näher erläutert. Dabei zeigen
- die Figuren 1 und 2: Sattelscheibenbremsen nach dem Stand der Technik,

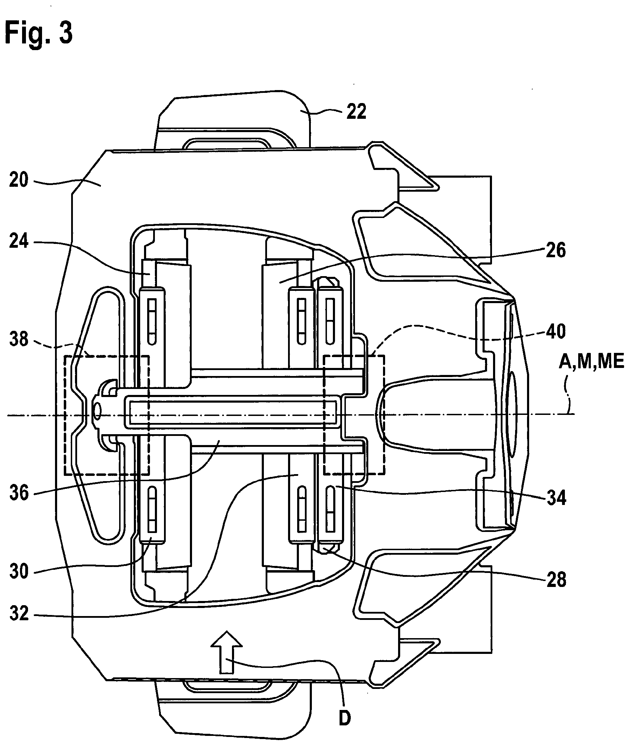

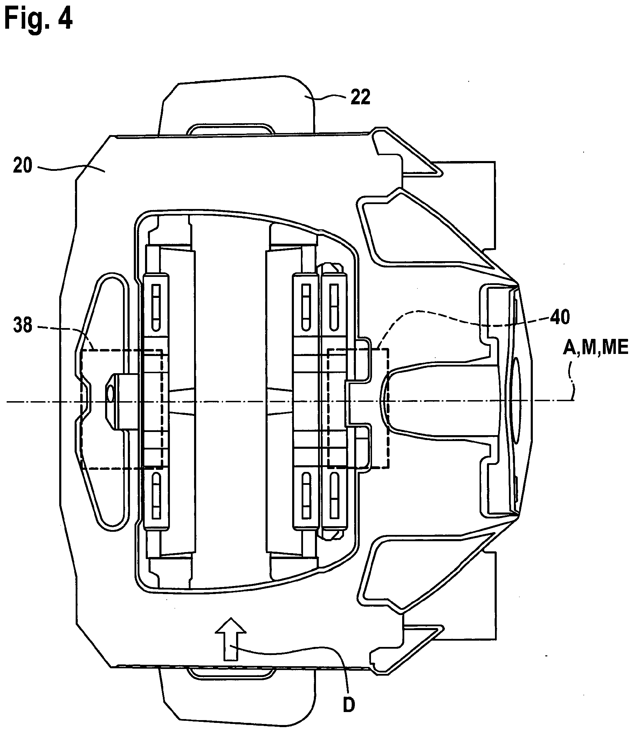

- die Figuren 3 und 4: schematische Draufsichten auf eine Sattelscheibenbremse nach einem Ausführungsbeispiel der Erfindung,

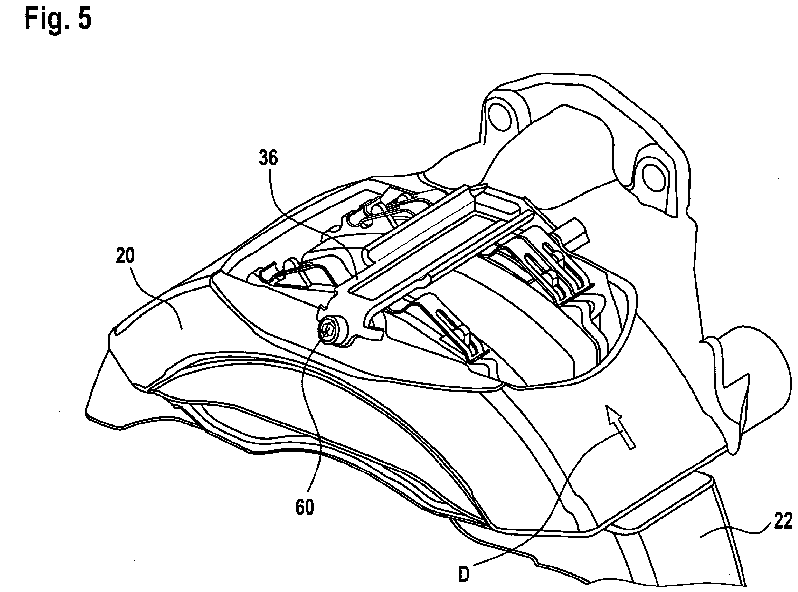

- Figur 5: eine schematische perspektivische Ansicht der Bremse nach den Figuren 3 und 4,

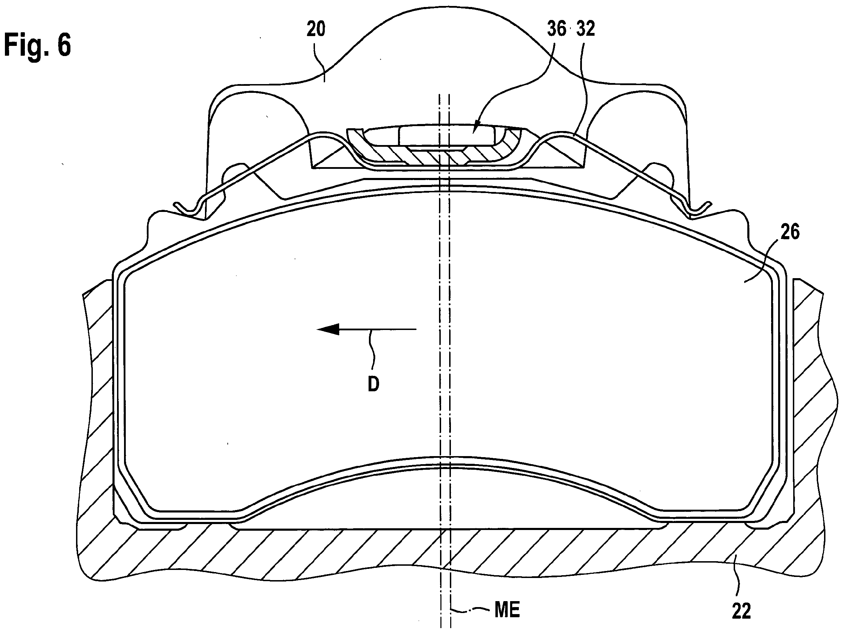

- Figur 6: eine schematische Schnittansicht der Bremse nach den Figuren 3 und 4,
- Figur 7: schematisch einen Niederhaltebügel der Bremse nach den Figuren 3 und 4,

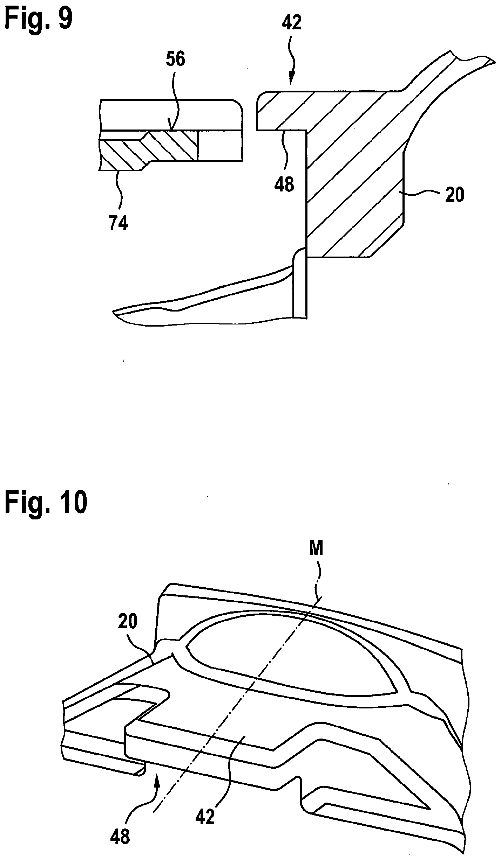

- die Figuren 8 und 9: das Zusammenspiel des Niederhaltebügels mit dem Bremssattel,
- Figur 10: eine perspektivische Teilansicht auf einen Haltebereich des Bremssattels für den Niederhaltebügel,
- Figur 11: eine schematische Teilansicht eines anderen Haltebereichs des Sattels für den Niederhaltebügel,
- die Figuren 12 und 13: zwei verschiedene Ausführungsformen der Befestigung des Niederhaltebügel auf der Felgenseite des Sattels,
- die Figuren 14 bis 18: verschiedene Ansichten von Niederhaltefedern für die Bremse nach den Figuren 3 und 4 und
- die Figuren 19 und 20: Schnittansichten des Zusammenspiels des Niederhaltebügels mit der Niederhaltefeder nach einem Ausführungsbeispiel der Erfindung bzw. nach dem Stand der Technik.

Das in der Zeichnung dargestellte Ausführungsbeispiel einer Sattelscheibenbremse nach der Erfindung weist eine (nicht gezeigte) Bremsscheibe auf, deren Drehachse mit A bezeichnet ist. Die Drehrichtung bei Vorwärtsfahrt ist mit einem Pfeil D bezeichnet. Die Bremse weist einen Bremssattel 20 und einen Bremsenträger 22 auf, wobei der Bremssattel die (nicht gezeigte) Bremsscheibe rahmenartig umgreift. Ein felgenseitiger Bremsbelag, bestehend aus einer metallischen Rückenplatte mit Reibbelag, ist mit der Bezugszahl 24 bezeichnet, ein zuspannseitiger Bremsbelag, bestehend aus einer metallischen Rückenplatte mit Reibbelag, mit der Bezugszahl 26 und eine Druckplatte mit der Bezugszahl 28. Bei den genannten Elementen handelt es sich um Kraftübertragungselemente. Sie werden mit Niederhaltefedern 30, 32 bzw. 34 niedergehalten, d.h. in Radialrichtung vorgespannt. Wie später noch erläutert wird, werden der Bremsbelag 26 und die Druckplatte 28 auch in Tangentialrichtung vorgespannt.

Zum Niederhalten der genannten Niederhaltefedern 30, 32 und 34 dient eine in Form eines Niederhaltebügels 36 ausgeführte Niederhalteeinrichtung, die sich über eine dem Ein-/Ausbau der beidseitig der Bremsscheibe gelagerten Bremsbeläge dienenden Sattelöffnung erstreckt. Der Niederhaltebügel 36 ist dabei nicht nur für die radiale Vorspannung der Niederhaltefedern 30, 32 und 34 verantwortlich, sondern auch für die tangentiale Vorspannung der Niederhaltefedern 32 und 34. Auf die Niederhaltefeder 30 und den Bremsbelag 24 wirkt demgegenüber nur eine radiale Vorspannung, jedoch keine tangentiale. Dadurch werden für den Betrieb der Bremse ungünstige und sich auf die leichte Verschiebbarkeit des Gleitsattels auswirkende Momente vermieden, die auf eine Tangentialvorspannung der Niederhaltefeder 30 und des Bremsbelags 24 zurückgingen.

Der Bremssattel 20, bei dem es sich in dem in der Zeichnung dargestellten Ausführungsbeispiel um einen Gleitsattel handelt, weist eine Halteeinrichtung zum Halten und Abstützen des Niederhaltebügels 36 auf. Zu dieser Halteeinrichtung gehören zwei Bereiche, nämlich ein felgenseitiger Bereich 38 und ein zuspannseitiger Bereich 40. Beide Bereiche sind (in der Draufsicht) symmetrisch zu einer Mittellinie M ausgebildet, die parallel zur Drehachse A liegt. Sie sind auch symmetrisch zu einer radialen Mittelebene ME, die von der Drehachse A und der Mittellinie M aufgespannt wird. Durch diese Symmetrie ist die Kontur der Halteeinrichtung derart, daß ein und dieselbe Form beim Gießen des Sattels verwendet werden kann, gleichgültig ob der Sattel für eine rechte oder eine linke Bremse ausgelegt ist.

Zu dem zuspannseitigen Bereich 40 der Halteeinrichtung gehört ein dachkantenartig ausgebildeter Vorsprung 42. Seine Seitenflanken 44, 46 dienen zum Aufnehmen von Tangentialkräften. Seine radial innen liegende Flanke 48 dient zum Aufnehmen von Radialkräften.

Der Niederhaltebügel 36 ist auf der Zuspannseite zu dem Vorsprung 42 passend ausgeführt. So weist er eine Einbuchtung 50 auf, die in montiertem Zustand den Vorsprung 42 aufnimmt. Seitenflanken 52 und 54 der Einbuchtung 50 dienen dabei zum Übertragen von Tangentialkräften. Eine radial außen liegende Fläche 56 dient zum Übertragen von Radialkräften. Sie liegt in eingebautem Zustand an der Flanke 48 des zur Bremsscheibe weisenden Vorsprungs 42 an.

In dem felgenseitigen Bereich 38 weist der Sattel 20 eine Gewindebohrung 58 auf, in die zum Befestigen des Niederhaltebügels 36 eine Schraube 60 eingeschraubt wird. Der felgenseitige Bereich 38 der Halteeinrichtung ist wie der zuspannseitige Bereich 40 symmetrisch bezüglich der Mittellinie M und der Mittelebene ME ausgeführt. Lediglich die Gewindebohrung 58 liegt nicht symmetrisch, um zu verhindern, daß ein Niederhaltebügel für eine rechte (linke) Bremse an einer linken (rechten) Bremse montiert wird. Sie ist nicht gießtechnisch ausgebildet, sondern wird nach dem eigentlichen Gießen des Sattels mittels eines Bohrers und/oder eines Gewindeschneiders eingebracht.

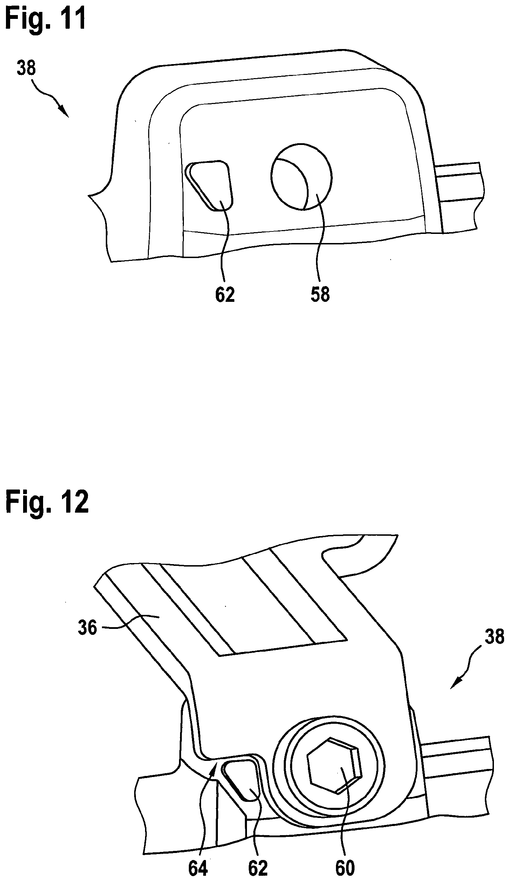

In dem Bereich 38 der Halteeinrichtung ist eine Kodiereinrichtung vorgesehen. Dazu kann gemäß den Figuren 11 und 12 bei der mechanischen Bearbeitung ein Überstand 62 ausgelassen werden, so daß gemäß Figur 12 nur ein solcher Niederhaltebügel 36 montiert werden kann, der eine zu dem Überstand 62 passende Ausnehmung 64 aufweist. Wie die Gewindebohrung 58 ist der Überstand 62 nicht durch Gießtechnik ausgebildet und kann daher unsymmetrisch angeordnet sein.

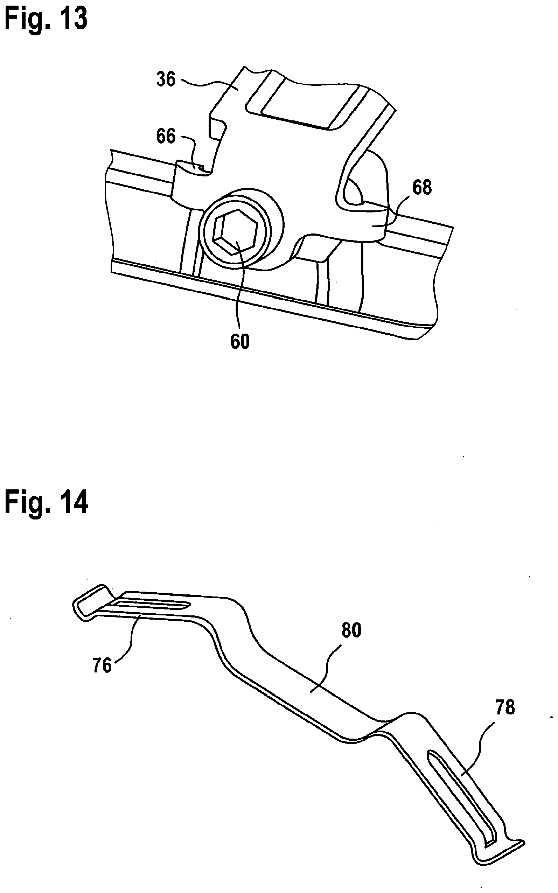

Zusätzlich oder alternativ kann auch vorgesehen sein, daß der Niederhaltebügel 36 gemäß Figur 13 Zapfenansätze aufweist, die korrespondierende Strukturen an dem Sattel 20 umgreifen. Dies stellt wiederum sicher, daß nur ein passender Niederhaltebügel 36 montiert werden kann.

Bei dem Überstand 62, der Ausnehmung 64 und den Zapfenansätzen 66 und 68 handelt es sich mithin um Kodiereinrichtungen, die sicherstellen, daß immer nur ein passender Niederhaltebügel an dem Sattel angebracht wird.

Der Niederhaltebügel ist in zweierlei Hinsicht unsymmetrisch. Zum einen weist er Tangentialansätze 70 und 72 nur auf der Zuspannseite auf, nicht aber auf der Felgenseite. Zum anderen sind seine Abmessungen V1, V2 gemessen in Tangentialrichtung von der Mittellinie M im Bereich des ersten Ansatzes 70, d.h. auf der Scheibenauslaufseite größer als im Bereich des Ansatzes 72, also auf der Scheibeneinlaufseite.

Durch diese Ausgestaltung ist es möglich, dem zuspannseitigen Bremsbelag 26 und der auf der Zuspannseite liegenden Druckplatte 28 eine tangentiale Vorspannung einzuprägen, ohne daß der Bremssattel 20 in den Bereichen 38 und 40 seiner Halteeinrichtung für den Niederhaltebügel 36 entsprechend unsymmetrisch ausgestaltet werden müßte und ohne daß eine nachteilige Tangentialvorspannung auf den felgenseitigen Bremsbelag 24 wirkt.

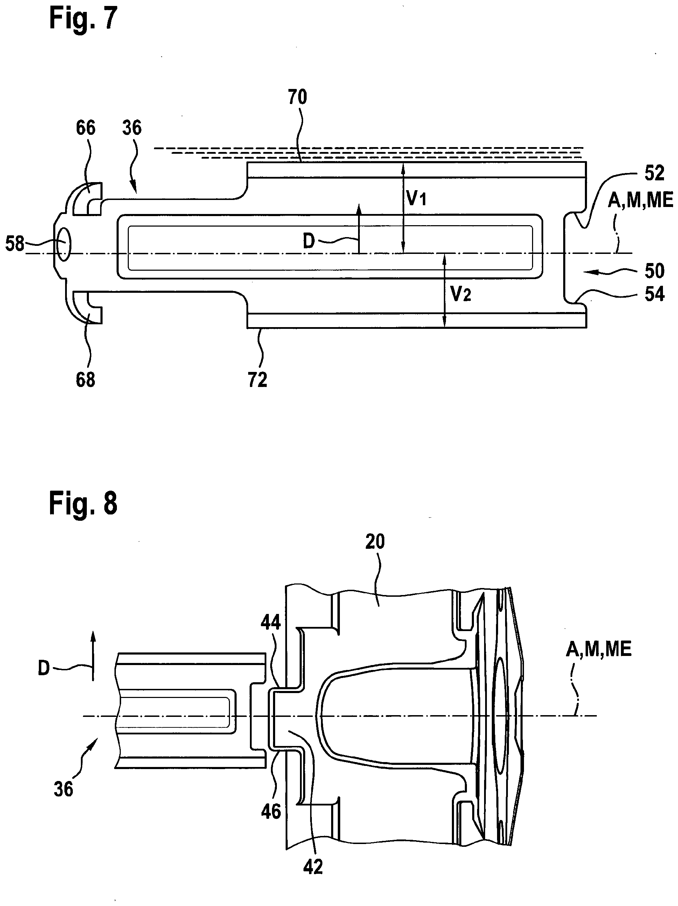

Auch die Vielfältigkeit, mit Aufbringung unterschiedlicher Federvorspannungen, kann im Zusammenspiel mit den Niederhaltefedern in einfacher Weise gezielt gesteuert werden. Dies kann dadurch erfolgen, daß nach Fig. 7 in Richtung der gestrichelten Linien zum Scheibenauslauf nur die Breite V1 des Niederhaltebügels verändert werden muß. Dafür ist lediglich das umzuformende Blechstanzteil entsprechend auszubilden. Im Zusammenspiel mit den o. g. Kodierungen kann dann eine genaue Zuordnung zur entsprechenden Bremse und deren Einsatzbedingungen erfolgen, ohne daß dafür Anpassungen an den Gußbereichen des Bremssattels vorzunehmen sind.

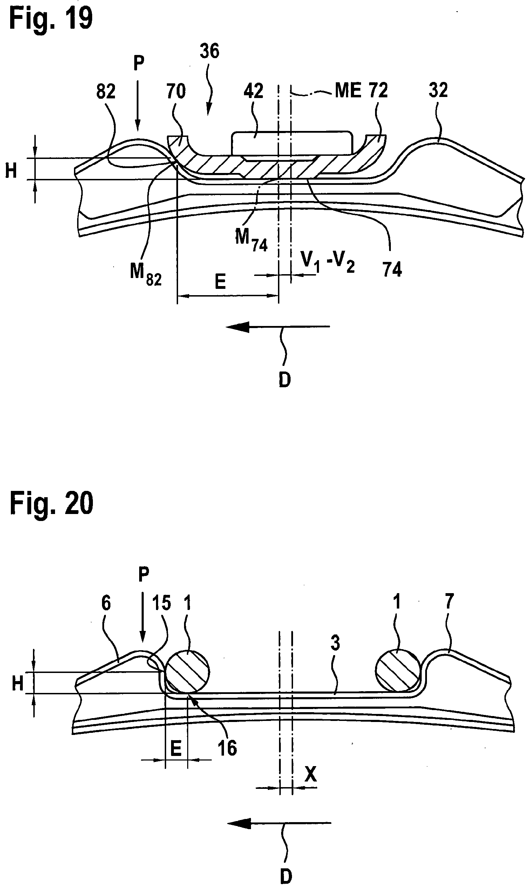

Der Niederhaltebügel 36 ist vorzugsweise als umgeformtes Blechstanzteil hergestellt und weist eine Sicke auf, die entsprechend der Differenz zwischen den Abmessungen V1 und V2 bezüglich der Mittellinie M bzw. der Radialebene R versetzt ist. Die Sicke ist mit der Bezugszahl 74 bezeichnet. Sie liegt in montiertem Zustand flächig an der jeweiligen Niederhaltefeder 30, 32 bzw. 34 an und dient zum Einprägen der radialen Vorspannung, vgl. Figur 19. Demgegenüber liegt bei der Ausgestaltung nach Figur 20, die dem Stand der Technik entspricht, nur eine Linienanlage vor. Eine solche Linienanlage belastet selbstverständlich die Niederhaltefeder erheblich stärker als die Flächenanlage nach Figur 19.

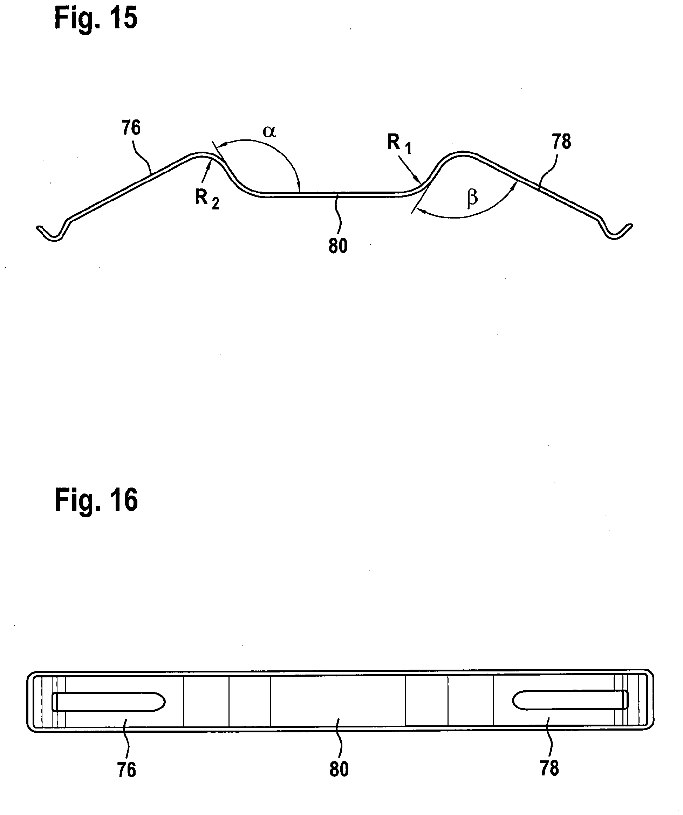

Ausgestaltungen der Niederhaltefeder in Form einer Blattfeder sind insbesondere den Figuren 14 bis 18 zu entnehmen. Sie weist zwei gleiche Federschenkel 76, 78 und einen dazwischen liegenden trapezförmigen Mittelbereich 80 auf, der nach radial innen vorspringt. Die beiden Schenkel des trapezförmigen Bereichs 80 schließen mit dessen Boden in entspanntem Zustand jeweils einen Winkel α von mehr als 95° ein. Bei dem in der Zeichnung dargestellten Ausführungsbeispiel sind es 117°. Mit den beiden benachbarten Federschenkeln 76, 78 schließen sie jeweils einen Winkel β von weniger als 85° ein. In dem dargestellten Ausführungsbeispiel beträgt der Winkel β 74°.

Die Federn sind in der Seitenansicht nicht eckig. Vielmehr sind sie in entspanntem Zustand im Übergangsbereich zwischen den beiden Schenkeln des trapezförmigen Bereichs 80 und dessen Boden jeweils bogenförmig mit einem Radius von jeweils 10 mm bis 16 mm, in dem dargestellten Ausführungsbeispiel 13 mm, und im Übergangsbereich zwischen dem trapezförmigen Bereich 80 und den Federschenkeln 76, 78 bogenförmig mit einem Radius von 4 mm bis 9,5 mm, in dem dargestellten Ausführungsbeispiel 7 mm.

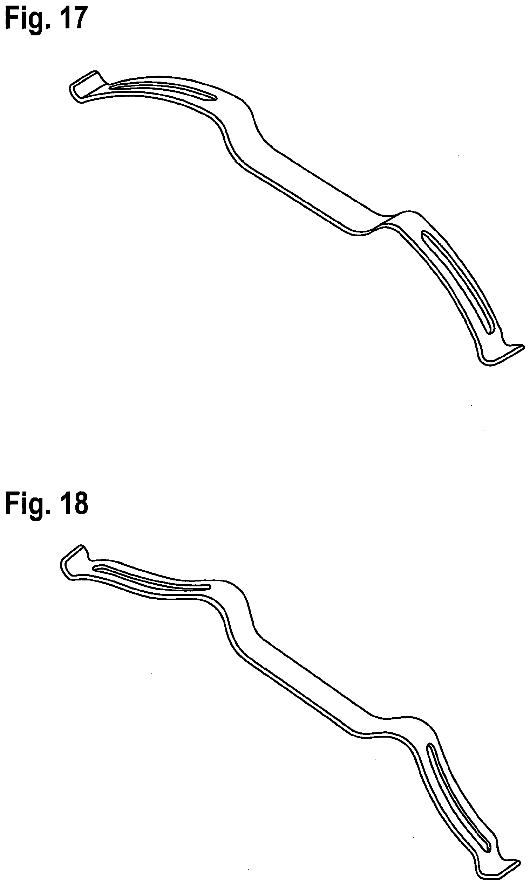

Die Federschenkel 76, 78 können entsprechend den Figuren 14 bis 16 gerade ausgeführt sein. Sie können aber auch konvex oder konkav gestaltet sein, wie dies den Figuren 17 und 18 zu entnehmen ist.

Derjenige Bereich des Vorsprungs 70, der an der Niederhaltefeder 32 anliegt, ist in Figur 19 mit der Bezugszahl 82 bezeichnet. Sein Mittelpunkt M₈₂ hat von dem Mittelpunkt M₇₄ in Radialrichtung den Abstand H und in Tangentialrichtung den Abstand E, wobei gilt H < E. Im Gegensatz dazu liegen die entsprechenden Anlagelinien 15 und 16 bei dem Stand der Technik derart, daß gilt: H = E, vgl. Fig. 20.

Bei dem in der Zeichnung dargestellten Ausführungsbeispiel liegt der Ort P der höchsten (Druck-)Spannung in der Niederhaltefeder 32, der sich im Übergangsbereich zwischen dem Mittenbereich 74 und dem Federschenkel 76 befindet, weit entfernt von dem (flächigen) Bereich des höchsten Verschleißes durch Reibung bzw. durch Radialanschlag des Bremsbelages bzw. der Druckplatte in den Kontaktbereichen.

Bei gleichen Einsatzbedingungen, wie vorab genannt, liegt demgegenüber nach dem Stand der Technik aus Figur 20 im radialen Kontaktbereich nur eine Linienanlage vor, so dass hier der Ort des höchsten Verschleißes im radialen Bereich mit der Linienanlage (siehe Pfeil) dann unmittelbar und nahe dem Bereich P der höchsten (Druck-)Spannung in der Niederhaltefeder angrenzt, wobei hier gilt H = E.

Wie insbesondere Figur 19 zu entnehmen ist, hat der Niederhaltebügel 36 im Querschnitt eine trogartige Ausgestaltung, wobei er außen, d.h. am Ende der Vorsprünge 70, 72 schräg angestellt ist. Dadurch sind geringfügige Relativbewegungen (Gleiten) bei Reversierbewegungen der Niederhaltefeder möglich. Beim Stand der Technik nach Figur 20 mit dem Rundmaterial, das an senkrechten Federabschnitten anliegt, ist dies nicht so. Die erfindungsgemäße Ausgestaltung senkt die Belastungen in den kritischen Zonen.

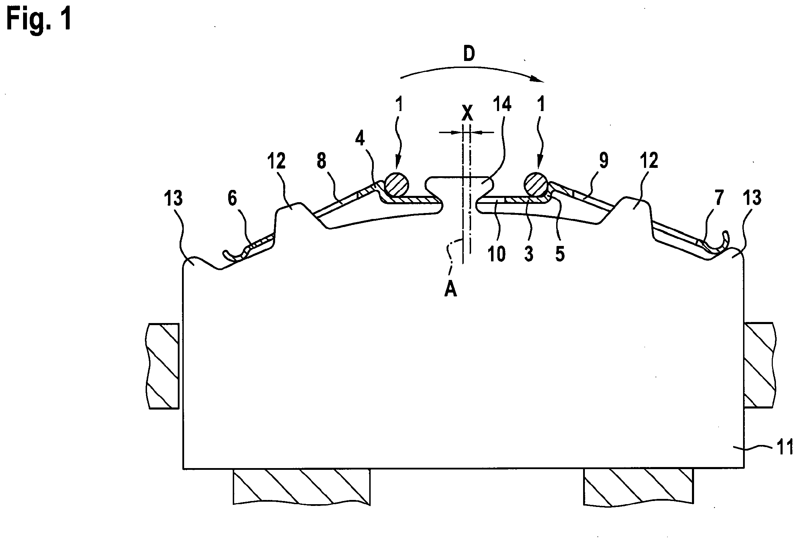

Wie im Stand der Technik nach Figur 1 sind auch hier in Axialrichtung der Bremsbeläge die Niederhaltefedern mit dem Bremsbelag gekoppelt, weil radiale Ansätze (12) von der Außenkante des Bremsbelages längliche Öffnungen (8, 9) in den beiden seitlichen Federschenkeln der Feder durchdringen. Endseitig liegen die Federschenkel gegen weitere radiale Ansätze (13, 13) der Außenkante des Bremsbelages an. Die Niederhaltefedern sind als Blattfedern ausgebildet.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Sattelscheibenbremse eines Fahrzeugs, insbesondere eines Nutzfahrzeugs, mit
einer eine Drehachse (A) aufweisenden Bremsscheibe,
einem Bremssattel (20),
einem Bremsenträger (22),
einem Kraftübertragungselement, wie etwa einem Belagträger (24, 26) und/oder einer Druckplatte (28), das in einem Schacht des Bremssattels oder des Bremsenträgers geführt und abgestützt ist,
einer Niederhaltefeder (30, 32, 34) zum Niederhalten des Kraftübertragungselements und
einer von einer Halteeinrichtung (38, 40) an dem Sattel gehaltenen und abgestützten Niederhalteeinrichtung (36), die
die Niederhaltefeder radial gegen die Kraftübertragungseinrichtung vorspannt und
die Niederhaltefeder tangential in Drehrichtung bei Vorwärtsfahrt gegen die Kraftübertragungseinrichtung vorspannt, wobei
die Halteeinrichtung eine parallel zur Drehachse liegende Mittellinie (M) aufweist,
**dadurch gekennzeichnet, daß**
die tangentiale Vorspannung zumindest teilweise darauf zurückgeht, daß die Abmessungen (V₁, V₂) der Niederhalteeinrichtung (36), gemessen in Tangentialrichtung von der Mittellinie (M) auf der Scheibenauslaufseite zumindest abschnittweise größer sind als auf der Scheibeneinlaufseite.

2. Sattelscheibenbremse nach Anspruch 1, **dadurch gekennzeichnet, daß** der Bremssattel (20) gießtechnisch hergestellt ist und seine Halteeinrichtung (38, 40) zum Halten und Abstützen der Niederhalteeinrichtung (36) bezüglich einer die Mittellinie (M) enthaltenden Radialebene (ME) symmetrisch ist, soweit ihre Kontur gießtechnisch vorgegeben ist.

3. Sattelscheibenbremse nach Anspruch 2, **dadurch gekennzeichnet, daß** die Halteeinrichtung (36) einen sich in Richtung der Drehachse (D) erstreckenden Vorsprung (42) aufweist, dessen Seitenflanken (44, 46) zum Aufnehmen von Tangentialkräften dienen und dessen radial innen liegende Flanke (48) zum Aufnehmen von Radialkräften dient.

4. Sattelscheibenbremse nach Anspruch 3, **dadurch gekennzeichnet, daß** der Vorsprung (42) dachkantenartig ausgestaltet ist.

5. Sattelscheibenbremse nach Anspruch 3 oder 4, **dadurch gekennzeichnet, daß** der Vorsprung (42) auf der Zuspannseite liegt.

6. Sattelscheibenbremse nach einem der Ansprüche 2 bis 5, **dadurch gekennzeichnet, daß** die Halteeinrichtung (38, 40) eine Kodiereinrichtung (62, 64; 66, 68) aufweist.

7. Sattelscheibenbremse nach Anspruch 6, **dadurch gekennzeichnet, daß** die Kodiereinrichtung (62, 64; 66, 68) einen Ansatz (62) aufweist.

8. Sattelscheibenbremse nach einem der Ansprüche 2 bis 7, **dadurch gekennzeichnet, daß** die Halteeinrichtung (36) eine Verschraubungseinrichtung (58) aufweist.

9. Sattelscheibenbremse nach einem der Ansprüche 6 bis 8, **dadurch gekennzeichnet, daß** die Kodiereinrichtung (62, 64; 66, 68) und/oder die Verschraubungseinrichtung (58) auf der Felgenseite liegt/liegen.

10. Sattelscheibenbremse nach einem der Ansprüche 2 bis 10, **dadurch gekennzeichnet, daß** der Bremssattel (20) ein Gleitsattel ist.

## Claims

1. Caliper disc brake of a vehicle, in particular a commercial vehicle, with
a brake disc having an axis of rotation (A),
a brake caliper (20),
a back plate assembly (22),
a force transmission element, such as a brake-pad plate (24, 26) and/or a pressure plate (28), which is guided and supported in a channel of the brake caliper or the back plate assembly,
a hold-down spring (30, 32, 34) for holding down the force transmission elements and
a hold-down device (36) held and supported on the caliper by a holding device (38, 40), which hold-down device
pre-stresses the hold-down spring radially against the force transmission device and
pre-stresses the hold-down spring against the force transmission device tangentially in the direction of rotation in forwards travel, wherein
the holding device has a centerline (M) lying parallel to the axis of rotation,
**characterized in that**
the tangential pre-stressing is at least partially attributable to the fact that the dimensions (V₁, V₂) of the hold-down device (36), measured in a tangential direction from the centerline (M), are at least in parts greater on the disc run-out side than on the disc run-in side.

2. Caliper disc brake according to Claim 1, **characterized in that** the brake caliper (20) is produced by casting and its holding device (38, 40) for holding and supporting the hold-down device (36) is symmetrical in relation to a radial plane (ME) containing the centerline (M), in so far as its contour is predefined by the casting process.

3. Caliper disc brake according to Claim 2, **characterized in that** the holding device (36) comprises a projection (42) extending in the direction of the axis of rotation (D), the lateral flanks (44, 46) of which serve to absorb tangential forces and the radially inner flank (48) of which serves to absorb radial forces.

4. Caliper disc brake according to Claim 3, **characterized in that** the projection (42) is of roof edge-like design.

5. Caliper disc brake according to Claim 3 or 4, **characterized in that** the projection (42) lies on the actuation side.

6. Caliper disc brake according to one of Claims 2 to 5, **characterized in that** the holding device (38, 40) comprises a coding device (62, 64; 66, 68).

7. Caliper disc brake according to Claim 6, **characterized in that** the coding device (62, 64; 66, 68) comprises a shoulder (62).

8. Caliper disc brake according to one of Claims 2 to 7, **characterized in that** the holding device (36) comprises a threaded connection device (58).

9. Caliper disc brake according to one of Claims 6 to 8, **characterized in that** the coding device (62, 64; 66, 68) and/or the threaded connection device (58) lies/lie on the wheel rim-side.

10. Caliper disc brake according to one of Claims 2 to 10, **characterized in that** the brake caliper (20) is a sliding caliper.

## Revendications

1. Frein à disque à étrier d'un véhicule, en particulier d'un véhicule utilitaire, comprenant un disque de frein présentant un axe de rotation (A),
un étrier de frein (20),
un support de frein (22),
un élément de transfert de force, par exemple un support de garniture (24, 26) et/ou une plaque de pression (28), qui est guidé et supporté dans un conduit de l'étrier de frein ou du support de frein,
un ressort de maintien (30, 32, 34) pour maintenir l'élément de transfert de force et
un dispositif de maintien (36) retenu et supporté par un dispositif de retenue (38, 40) sur l'étrier, lequel
précontraint le ressort de maintien radialement contre le dispositif de transfert de force et précontraint le ressort de maintien tangentiellement dans la direction de rotation lors d'une conduite vers l'avant contre le dispositif de transfert de force,
le dispositif de retenue présentant un axe médian (M) situé parallèlement à l'axe de rotation, **caractérisé en ce que**
la précontrainte tangentielle est au moins en partie attribuée au fait que les dimensions (V₁, V₂) du dispositif de maintien (36), mesurées dans la direction tangentielle depuis l'axe médian (M) sont au moins en partie plus importantes sur le côté de sortie de disque que sur le côté d'entrée du disque.

2. Frein à disque à étrier selon la revendication 1, **caractérisé en ce que** l'étrier de frein (20) est fabriqué par une technique de moulage et son dispositif de retenue (38, 40) pour retenir et supporter le dispositif de maintien (36) est symétrique par rapport à un plan radial (ME) contenant l'axe médian (M) dans la mesure où son contour est prédéfini par une technique de moulage.

3. Frein à disque à étrier selon la revendication 2, **caractérisé en ce que** le dispositif de retenue (36) présente une saillie (42) s'étendant dans la direction de l'axe de rotation (D), dont les flancs latéraux (44, 46) servent à recevoir des forces tangentielles et dont le flanc situé radialement à l'intérieur (48) sert à recevoir des forces radiales.

4. Frein à disque à étrier selon la revendication 3, **caractérisé en ce que** la saillie (42) est réalisée en forme d'arête de toit.

5. Frein à disque à étrier selon la revendication 3 ou 4, **caractérisé en ce que** la saillie (42) est située sur le côté de serrage.

6. Frein à disque à étrier selon l'une quelconque des revendications 2 à 5, **caractérisé en ce que** le dispositif de retenue (38, 40) présente un dispositif de codage (62, 64 ; 66, 68).

7. Frein à disque à étrier selon la revendication 6, **caractérisé en ce que** le dispositif de codage (62, 64 ; 66, 68) présente une partie saillante (62).

8. Frein à disque à étrier selon l'une quelconque des revendications 2 à 7, **caractérisé en ce que** le dispositif de retenue (36) présente un dispositif de vissage (58).

9. Frein à disque à étrier selon l'une quelconque des revendications 6 à 8, **caractérisé en ce que** le dispositif de codage (62, 64 ; 66, 68) et/ou le dispositif de vissage (58) est/sont situé(s) sur le côté de la jante.

10. Frein à disques à étrier selon l'une quelconque des revendications 2 à 10, **caractérisé en ce que** l'étrier de frein (1) est un étrier coulissant.
